(19) Europäisches Patentamt / European Patent Office / Office européen des brevets

(11) **EP 4 300 387 A1**

(12) **EUROPEAN PATENT APPLICATION**

(43) Date of publication:
**03.01.2024 Bulletin 2024/01**

(21) Application number: **23174871.6**

(22) Date of filing: **23.05.2023**

(51) International Patent Classification (IPC):
**G06Q 10/04** (2023.01)    **G06Q 30/08** (2012.01)
**G06Q 50/06** (2012.01)    **H02J 3/00** (2006.01)

(52) Cooperative Patent Classification (CPC):
**G06Q 10/04; G06Q 10/06; G06Q 30/0201;
G06Q 40/04; G06Q 50/06; H02J 3/008**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.06.2022 IN 202221036846**

(71) Applicant: **Tata Consultancy Services Limited
Maharashtra (IN)**

(72) Inventors:
• **MENON, VISHNU PADMAKUMAR
411013 Pune, Maharashtra (IN)**

• **BICHPURIYA, YOGESH KUMAR
411013 Pune, Maharashtra (IN)**
• **SARANGAN, VENKATESH
600113 Chennai, Tamil Nadu (IN)**
• **LOKHANDE, SMITA
400093 Mumbai, Maharashtra (IN)**
• **PRAJAPATI, ASHUTOSH
411013 Pune, Maharashtra (IN)**
• **RAJAGOPAL, NARAYANAN
560009 Bangalore, Karnataka (IN)**
• **MAHILONG, NIDHISHA
411013 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(54) **OPTIMAL INTRADAY SCHEDULING OF AGGREGATED DISTRIBUTED ENERGY RESOURCES (DERS)**

(57) This disclosure relates generally to optimal intraday scheduling of aggregated Distributed Energy Resources (DERs). Owing to their stochastic nature, DERs aggregators are more suited to participate in intraday electricity markets. The current works on DER aggregators trading in intraday markets do not satisfactorily model the different aspects. The disclosure is an optimal trading strategy for aggregators managing heterogeneous DERs to participate in intraday markets. The intraday market is modelled using a joint price-volume dynamics distribution and an optimal bidding strategy is disclosed for the trades/bids placed earlier to be corrected based on the revised forecasts of demand and generation while allowing for energy exchanges within the DER pool. Further the optimal bidding strategy of aggregators in an intraday market is a MINLP problem, which is solved by converting the complex non-linearities in the problem into a coupled MILP - simple maximization set-up, which is then solved in an iterative fashion.

Plurality of inputs

(a) a final set of price parameters,
(b) a final set of volume parameters, and
(c) a final operation schedule of the plurality of DERs

**FIG. 2**

EP 4 300 387 A1

**Description**

CROSS-REFERENCE TO RELATED APPLICATIONS AND PRIORITY

The present application claims priority from Indian patent application no. 202221036846, filed on June 27, 2022.

TECHNICAL FIELD

The disclosure herein generally relates to intraday scheduling of resources in electricity market and, more particularly, to optimal intraday scheduling of aggregated Distributed Energy Resources (DERs).

BACKGROUND

The Distributed Energy Resources (DERs) such as solar, wind farms, electric vehicles, energy storage systems are bringing significant changes in the power systems. The DERs are usually owned by end users connected to the low and medium voltage distribution networks with smaller capacities. Considering, the smaller capacities of DERs, it is economically inefficient for DERs to participate individually in markets by themselves due to the high transaction costs and low individual capacities. To address the challenge of individual DER, an aggregator is used to coordinate the DERs and provide services to the power system by providing the necessary technology to communicate and control the DERs. Simultaneously, the aggregators also create private value by allowing their subscribers to earn revenue through market participation.

Owing to stochastic nature of the DERs aggregators, they are more suited to participate with a trading horizon shorter than day-ahead markets but longer than real-time electricity markets - also referred to as "short-term" or "intraday" markets which operate in a short-term time range or intraday electricity markets.

The existing intra-day DER trading techniques either reduce the cost of energy procurement or maximize the revenue generated through trading. Also, most of the state-of-art techniques possess one or more of the following gaps: Most of existing techniques assume only one type of DER such as storage or EVs while the heterogeneity of DERs is not considered. Further the existing techniques do not model the continuous price fluctuations in the market but assume the clearing price to remain constant over certain duration. The model constraints placed by the network operator for injecting or withdrawing power at network buses are also not always considered in the state-of-art techniques for intra-day DER trading. Further usually there is no provision for energy exchanges to happen within the DER pool managed by an aggregator. Hence there is a requirement of an optimal intraday scheduling of aggregated DERs that can address the identified challenge.

SUMMARY

Embodiments of the present disclosure present technological improvements as solutions to one or more of the above-mentioned technical problems recognized by the inventors in conventional systems. For example, in one embodiment, a method for optimal intraday scheduling of aggregated DERs is provided.

The system is configured to receive a plurality of inputs, via one or more hardware processors, wherein the plurality of inputs is associated with a plurality of intraday market historical data, a plurality of network data, a plurality of DERs, a plurality of DER data including a DER asset forecast and a DER technical information. The system is further configured to create a basic operation schedule of the plurality of DERs for a pre-defined intraday time, via the one or more hardware processors, using the plurality of inputs based on a scheduling technique subject to a plurality of constraints, wherein the first operation schedule comprises a set of basic price parameters, a set of basic volume parameters, a basic operation schedule of the plurality of DERs and the plurality of constraints are determined based on the plurality of inputs. The system is further configured to schedule the plurality of DER at the pre-defined intraday time by optimizing the basic operation schedule, via the one or more hardware processors, wherein the scheduling comprises determining a final set of price parameters, a final set of volume parameters and a final operation schedule of the plurality of DERs, wherein: initializing the set of basic price parameters in the basic operation schedule based on the plurality of intraday market historical data to obtain a first operation schedule; determining a first set of volume parameters using the first operation schedule; obtaining a second operation schedule using the first set of volume parameters in the first operation schedule; determining a first set of price parameters using the second operation schedule based on the first set of volume parameters; determining a second set of volume parameters using the first operation schedule based on the first set of price parameters; determining a second set of price parameters using the second operation schedule based on the second set of volume parameters; determining a third set of volume parameters using the first operation schedule based on the second set of price parameters; determining a third set of price parameters using the second operation schedule based on the third set of volume parameters; computing a set of error parameters using the second set of price parameters, the second set of volume parameters, the third set of price parameters and the third set of volume parameters; comparing the set of error parameters to a set of error threshold parameters and performing one of: a) setting the third set of price parameter as the final set of price parameters and setting the third set of volume parameter as the final set of volume parameters, if the set of error parameters is within the set of error threshold parameters, and b) iteratively solving the first operation schedule and the second operation schedule until the set of error parameters is within the set of error threshold parameters, if the set of error parameters is not within the set of error threshold parameters; and determining the final operation schedule of the plurality of DERs based on the final set of price parameters, a final set of volume parameters using the basic operation schedule.

In another aspect, a method for optimal intraday scheduling of aggregated DERs is provided. The method includes receiving a plurality of inputs wherein the plurality of inputs is associated with a plurality of intraday market historical data, a plurality of network data, a plurality of DERs, a plurality of DER data including a DER asset forecast and a DER technical information. The method includes creating a basic operation schedule of the plurality of DERs for a pre-defined intraday time using the plurality of inputs based on a scheduling technique subject to a plurality of constraints, wherein the first operation schedule comprises a set of basic price parameters, a set of basic volume parameters, a basic operation schedule of the plurality of DERs and the plurality of constraints are determined based on the plurality of inputs. The method includes scheduling the plurality of DER at the pre-defined intraday time by optimizing the basic operation schedule, wherein the scheduling comprises determining a final set of price parameters, a final set of volume parameters and a final operation schedule of the plurality of DERs, wherein: initializing the set of basic price parameters in the basic operation schedule based on the plurality of intraday market historical data to obtain a first operation schedule; determining a first set of volume parameters using the first operation schedule; obtaining a second operation schedule using the first set of volume parameters in the first operation schedule; determining a first set of price parameters using the second operation schedule based on the first set of volume parameters; determining a second set of volume parameters using the first operation schedule based on the first set of price parameters; determining a second set of price parameters using the second operation schedule based on the second set of volume parameters; determining a third set of volume parameters using the first operation schedule based on the second set of price parameters; determining a third set of price parameters using the second operation schedule based on the third set of volume parameters; computing a set of error parameters using the second set of price parameters, the second set of volume parameters, the third set of price parameters and the third set of volume parameters; comparing the set of error parameters to a set of error threshold parameters and performing one of: a) setting the third set of price parameter as the final set of price parameters and setting the third set of volume parameter as the final set of volume parameters, if the set of error parameters is within the set of error threshold parameters, and b) iteratively solving the first operation schedule and the second operation schedule until the set of error parameters is within the set of error threshold parameters, if the set of error parameters is not within the set of error threshold parameters; and determining the final operation schedule of the plurality of DERs based on the final set of price parameters, a final set of volume parameters using the basic operation schedule.

In yet another aspect, a non-transitory computer readable medium for optimal intraday scheduling of aggregated DERs. The method includes receiving a plurality of inputs wherein the plurality of inputs is associated with a plurality of intraday market historical data, a plurality of network data, a plurality of DERs, a plurality of DER data including a DER asset forecast and a DER technical information. The method includes creating a basic operation schedule of the plurality of DERs for a pre-defined intraday time using the plurality of inputs based on a scheduling technique subject to a plurality of constraints, wherein the first operation schedule comprises a set of basic price parameters, a set of basic volume parameters, a basic operation schedule of the plurality of DERs and the plurality of constraints are determined based on the plurality of inputs. The method includes scheduling the plurality of DER at the pre-defined intraday time by optimizing the basic operation schedule, wherein the scheduling comprises determining a final set of price parameters, a final set of volume parameters and a final operation schedule of the plurality of DERs, wherein: initializing the set of basic price parameters in the basic operation schedule based on the plurality of intraday market historical data to obtain a first operation schedule; determining a first set of volume parameters using the first operation schedule; obtaining a second operation schedule using the first set of volume parameters in the first operation schedule; determining a first set of price parameters using the second operation schedule based on the first set of volume parameters; determining a second set of volume parameters using the first operation schedule based on the first set of price parameters; determining a second set of price parameters using the second operation schedule based on the second set of volume parameters; determining a third set of volume parameters using the first operation schedule based on the second set of price parameters; determining a third set of price parameters using the second operation schedule based on the third set of volume parameters; computing a set of error parameters using the second set of price parameters, the second set of volume parameters, the third set of price parameters and the third set of volume parameters; comparing the set of error parameters to a set of error threshold parameters and performing one of: a) setting the third set of price parameter as the final set of price parameters and setting the third set of volume parameter as the final set of volume parameters, if the set of error parameters is within the set of error threshold parameters, and b) iteratively solving the first operation schedule and the second operation schedule until the set of error parameters is within the set of error threshold parameters, if the set of error parameters is not within the set of error threshold parameters; and determining the final operation schedule of the plurality of DERs based on the final set of price parameters, a final set of volume parameters using the basic operation schedule.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for optimal intraday scheduling of aggregated DERs according to some embodiments of the present disclosure.
FIG. 2 is a functional block diagram for optimal intraday scheduling of aggregated DERs of the system of FIG. 1, according to some embodiments of the present disclosure.
FIGS. 3A to FIG.3D is a flow diagram illustrating a method (300) for optimal intraday scheduling of aggregated DERs of the system of FIG. 1, in accordance with some embodiments of the present disclosure.
FIG.4 illustrates an experimental set-up of a bus (node) radial distribution network in accordance with some embodiments of the present disclosure.
FIG.5 illustrates an experimental revenue earned by the two techniques across the 16 test days in accordance with some embodiments of the present disclosure.
FIG.6 illustrates the performance of the baseline and the disclosed techniques under a higher generation accordance with some embodiments of the present disclosure.
FIG. 7 illustrates the performance of the proposed techniques along with the baseline for a pre-defined period in accordance with some embodiments of the present disclosure.
FIG.8 illustrates performance of the proposed techniques along with the baseline an aggregator with multiple DERs in accordance with some embodiments of the present disclosure.

DETAILED DESCRIPTION OF EMBODIMENTS

Exemplary embodiments are described with reference to the accompanying drawings. In the figures, the leftmost digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Intraday markets for electricity are also referred as continuous markets as the trading happens in continuous time slots until the trade window closure. Trading in these markets typically starts after the day-ahead market clearing. In intraday markets, the bids for a given delivery time can be placed anywhere from the previous afternoon to few minutes before the delivery. The exact gate opening and closing times varies across geographies. Different exchanges offer varying products that range from simple products (which are limited to one time slot) to block products (which span multiple continuous time slots).

Intraday markets typically follow pay-as-bid pricing for bid clearing. Under a bid clearing model, a market operator matches an incoming bid order with the best opposite order as soon as it is submitted. If there is no suitable match, the incoming order stays in the order book until it's expiry condition is met. The best opposite order is defined as a highest priced buy order or lowest priced sell order. If the best opposite order matches with the price condition of the incoming bid order, a transaction happens. An order can get fulfilled either completely or partially. If an order is cleared partially, the remaining quantity stays in the order book.

With the knowledge of customer preferences, demands, asset constraints, and the generation availability, a DER aggregator participates in an intraday market. Market participation is for both procuring and selling power. The DER aggregator places the bids in a such a way that the revenue obtained through market participation is maximized. The aggregator also schedules the operations of the individual DERs based on the cleared market commitments.

The disclosure is an optimal trading strategy for aggregators managing a heterogeneous set of DERs in an intraday market. In the disclosure, the intraday market is modelled using a joint price-volume dynamics distribution and a strategy is disclosed for the trades/bids placed earlier to be corrected based on the revised forecasts of demand and generation while allowing for energy exchanges within the DER pool.

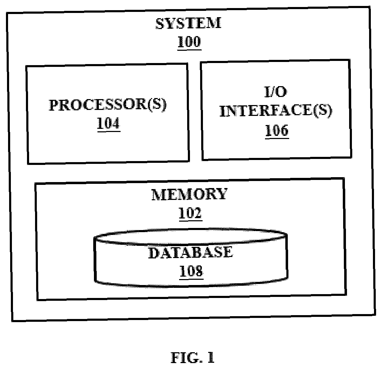

Referring now to the drawings, and more particularly to FIG. 1 through FIG. 8, where similar reference characters denote corresponding features consistently throughout the figures, there are shown preferred embodiments and these embodiments are described in the context of the following exemplary system and/or method.

FIG.1 is an exemplary block diagram of a system 100 for optimal intraday scheduling of aggregated DERs in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of the system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 is configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, a network cloud and the like.

The I/O interface(s) 106 can include a variety of software and hardware interfaces, for example, a web interface, a graphical user interface, a touch user interface (TUI) and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

Further, the memory 102 may include a database 108 configured to include information regarding for optimal intraday scheduling of aggregated DERs. The memory 102 may comprise information pertaining to input(s)/output(s) of each step performed by the processor(s) 104 of the system 100 and methods of the present disclosure. In an embodiment, the database 108 may be external (not shown) to the system 100 and coupled to the system via the I/O interface 106.

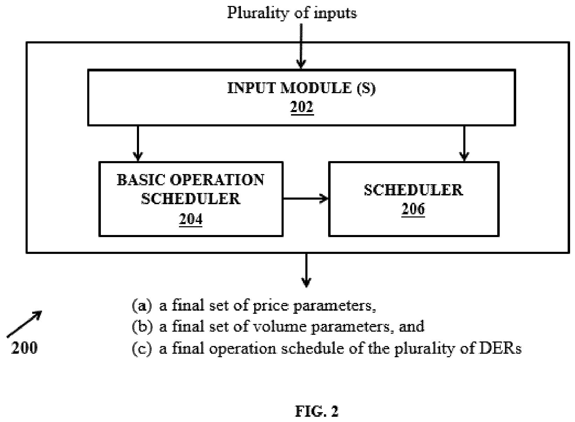

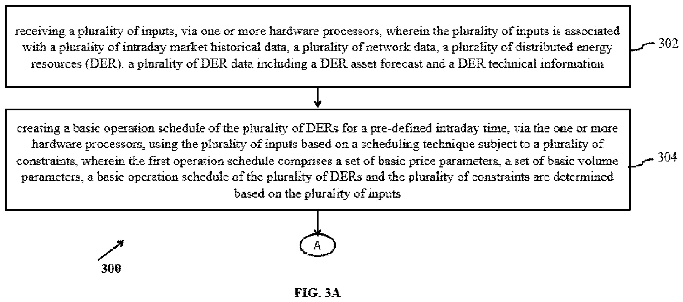

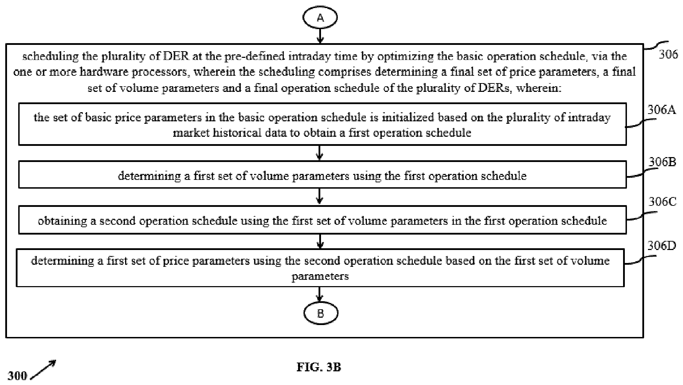

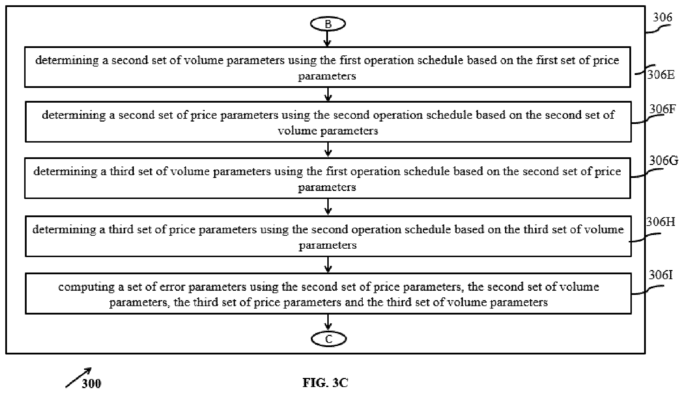

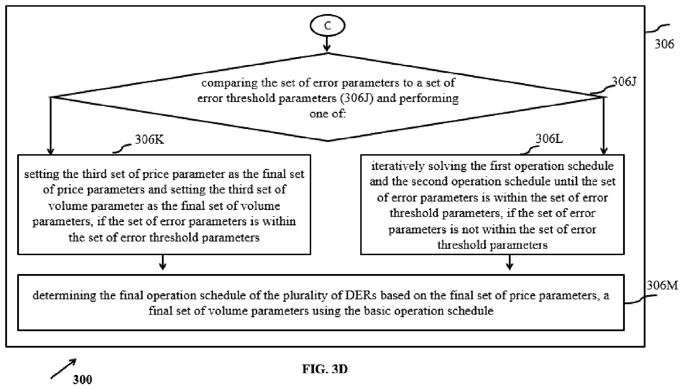

Functions of the components of system 100 are explained in conjunction with functional overview of the system 100 in FIG.2 and flow diagram of FIGS.3A and FIG.3B for optimal intraday scheduling of aggregated DERs.

The system 100 supports various connectivity options such as BLUETOOTH®, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

In an embodiment, the system 100 is stationed within a DER aggregator is an aggregator that orchestrates the operations of a set of heterogeneous DERs, wherein the terms DER aggregator and aggregator DERs are used interchangeably in the disclosure. The system 100 enables optimal intraday scheduling for the aggregated DERs.

FIG.2 is an example functional block diagram of the various modules of the system of FIG. 1, in accordance with some embodiments of the present disclosure. As depicted in the architecture, the FIG.2 illustrates the functions of the modules of the system 100 that includes for optimal intraday scheduling of aggregated DERs.

As depicted in FIG.2, the functional system 200 of system 100 system 200 is configured for optimal intraday scheduling of aggregated DERs.

In an embodiment, the system 200 is configured for receiving a plurality of inputs in an input module 202, wherein the plurality of inputs is associated with a plurality of intraday market historical data, a plurality of network data, a plurality of distributed energy resources (DER). The system 200 further comprises a basic operation scheduler 204 configured for creating a basic operation schedule of the plurality of DERs for a pre-defined intraday time, using the plurality of inputs, based on a scheduling technique subject to a plurality of constraints. The system 200 further comprises a scheduler 206 configured for scheduling the plurality of DER at the pre-defined intraday time by optimizing the basic operation schedule, wherein the scheduling comprises determining a final set of price parameters, a final set of volume parameters and a final operation schedule of the plurality of DERs.

The various modules of the system 100 and the functional blocks in FIG.2 are configured for optimal intraday scheduling of aggregated DERs are implemented as at least one of a logically self-contained part of a software program, a self-contained hardware component, and/or, a self-contained hardware component with a logically self-contained part of a software program embedded into each of the hardware component that when executed perform the above method described herein.

Functions of the components of the system 200 are explained in conjunction with functional modules (not shown) of the system 100 stored in the memory 102 and further explained in conjunction with flow diagram of FIGS.3A-3D. The FIGS.3A-3D with reference to FIG. 1, is an exemplary flow diagram illustrating a method 300 for optimal intraday scheduling of aggregated DERs using the system 100 of FIG. 1 according to an embodiment of the present disclosure.

The steps of the method of the present disclosure will now be explained with reference to the components of the system 100 of FIG. 1 for optimal intraday scheduling of aggregated DERs and the modules 202-210 as depicted in FIG. 2 and the flow diagrams as depicted in FIGS.3A-3D. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 302 of the method 300, a plurality of inputs is received at the input module 202. The plurality of inputs is associated with a plurality of intraday market historical data, a plurality of network data, a plurality of distributed energy resources (DER), a plurality of DER data including a DER asset forecast and a DER technical information.

In an embodiment, the DER aggregator is a centralized set-up wherein an aggregator orchestrates the operations of a set of heterogeneous DERs. The DER aggregator has the knowledge of the characteristics (size, ratings, constraints and preferences) of the participating DERs. A subscriber s has a generation source (e.g., solar PV), demand, energy storage systems (e.g., battery) or any combination of these. The DER aggregator can forecast the renewable generation and overall demand of its subscribers using historical logs and other pertinent information.

A subscriber s has two kinds of demands: fixed demand, $d_{t,s}^{fix}$ , and flexible demand, $d_{t,s}^{flex}$ . As the name indicates, fixed demand is that part of the customer load that remains fixed and has to be supplied at the specified time t. Flexible demand is that part of the customer load where there is flexibility in terms of the time(s) at which this demand can be satisfied. While the quantum of flexible demand is decided by the customer, its schedule is decided by the DER aggregator. The DER aggregator can split a customer's overall demand into flexible and fixed components by leveraging information about customer's appliance set and operational preferences (which can be periodically collected). With the knowledge of customer preferences, demands, asset constraints, and the generation availability, an aggregator participates in an intraday market. Market participation is for both procuring and selling power. The DER aggregator places the bids in a such a way that the revenue obtained through market participation is maximized. The DER aggregator also schedules the operations of the individual DERs based on the cleared market commitments.

At step 304 of the method 300, a basic operation schedule of the plurality of DERs for a pre-defined intraday time is created in the basic operation scheduler 204. The basic operation schedule is created using the plurality of inputs based on a scheduling technique subject to a plurality of constraints. The first operation schedule comprises a set of basic price parameters, a set of basic volume parameters, a basic operation schedule of the plurality of DERs.

In an embodiment, for a delivery slot of *h,* the DER aggregator's trading window would be a sequence of $\tau$ consecutive slots from $h$ - $\tau$ - $r$ till $h$ - $r$ , where $r$ is the minimum lead time allowed by the market operator. The optimal trading strategy is formulated to achieve the following objectives:

(1) Given a delivery time slot *h* and a trading slot $t \in [h - \tau - r, h - r]$, determine the volume of the buy or sell bids the aggregator has to place in the market at t for *h.*
(2) Determine the price for the buy or sell bids the aggregator has to be place in the market at t for *h.*
(3) The volumes and prices have to be determined such that the revenue earned by the aggregator is maximized and the demand requirements of the DERs in the aggregator's subscriber pool are met.

Hence based on the above conditions, the basic operation schedule is formulated using the set of basic price parameters and the basic set of volume parameters subject to a plurality of constraints and is expressed as shown below:

$$\max_{p_h, q_h} \sum_{h \in W^t} ps_h qs_h . F^{sell}(p_h, q_h) - \sum_{h \in W^t} pb_h qb_h \left(1 - F^{buy}(p_h, q_h)\right) \quad (A)$$

where:

$h$ is a pre-defined time at which power should be delivered,
$p_h$ is set of basic price parameters comprising ($ps_h$, $pb_h$ )
$q_h$ is set of basic price volume parameters comprising ($qs_h$, $qb_h$)
$ps_h$ is set of basic price parameters - the sell offer price during *h,*

$qs_h$ is set of basic volume parameters - the sell offer volume during $h$,
$pb_h$ is set of basic price parameters - the buying price during $h$,
$qb_h$ is set of basic volume parameters - the buying volume during $h$,
$W_t$ is an intraday trading window,
$F^{buy}$ is a Joint probability distribution for buying, and
$F^{sell}$ is Joint probability distribution for selling.

The set of basic price parameters comprises a buy price and a sell price and the set of basic volume parameters comprises a buy volume and a sell volume.

In an embodiment, the plurality of constraints is determined based on the plurality of inputs. The plurality of constraints comprises a market and pool trading constraint, a network and battery constraint, a demand constraint, a trade volume revision constraint and a buy-sell constraint.

The market and pool trading constraint is determined based on the DER asset forecast. During delivery slot $h$, the generation available with the aggregator at a network node $n$ is equal to the sum of the battery discharge volumes and local generation of subscribers under that node. This generation can either be exported to the intraday market through sell bids or utilized to meet the demands of its own subscriber pool across nodes, as shown below:

$$x_{h,n}^{mktExp} + x_{h,n}^{nodeExp} = \sum_{s \in S_n} ( G_{h,s} + b_{h,s}^{dsg} ), \forall\, n \in N, \forall h \in W^t \quad (1)$$

Similarly, at $h$, the demand of the aggregator at node $n$ is equal to the sum of battery charging volumes, fixed loads of customers attached to $n$ $(d_{t,s}^{fix})$, and flexible loads of customers attached to $n$ that are being scheduled ($d_{t,s}^{flex}$). As before, this demand can either be met through purchases in the intraday market via buy bids or the generation imported from the subscriber pool at other nodes, as shown below:

$$x_{h,n}^{mktImp} + x_{h,n}^{nodeImp} = \sum_{s \in S_n} \left( d_{h,s}^{fix} + d_{h,s}^{flex} + b_{h,s}^{chg} \right), \forall n \in N, \forall h \in w^t \quad (2)$$

The amount of energy exchanged at a node is split between market and pool components. Market exports increase the revenue earned by the aggregator while pool exports decrease the revenue outflow. The converse holds for market and pool imports. The underlying assumption is that the import from pool is from self generation and hence is less expensive than the market. The net power traded by the DERs at node $n$ with the market equals the difference of market export and import components and is given as shown below :

$$x_{h,n} = x_{h,n}^{mktExp} - x_{h,n}^{nodeImp}, \forall n \in N, \forall h \in W^t \quad (3)$$

Further to balance the power exchange occurring within the pool i.e., the total power exported onto the pool should always be equal to the power imported into the pool is done as shown below :

$$\sum_{n \in N} x_{h,n}^{nodeImp} = \sum_{n \in N} x_{h,n}^{nodeExp}, \forall h \quad (4)$$

The network and battery constraint is determined based on the plurality of network data and a DER technical information. The amount of power that can be injected by the DERs into the network could be limited by the hosting capacity and other operational limits of the network. Such limits are assumed to be communicated by the network operator to the DER aggregators at least $\tau$ slots in advance. The equation shared below enforces the nodal limits set by the network operator on the DER aggregator:

$$\left| x_{h,n} + x_{h,n}^{nodeExp} - x_{h,n}^{nodeImp} \right| \leq Lim_n, \forall n \in N \quad (5)$$

Equations 6, and 7 enforce the relationship between the state of change (SOC) and charge/discharge volumes of batteries available with subscribers:

$$SOC_{h,s} = SOC_{h-1,s} + b_{h,s}^{chg} - b_{h,s}^{dsg} \,, \forall h \in W^t, \forall s \in S \quad (6)$$

$$SOC_s^{min} \leq SOC_{h,s} \leq SOC_{h,s}^{max} \,, \forall h \in W^t, \forall s \in S \quad (7)$$

The values of $SOC_{t+r-1,s\,wi}$ is determined by the optimal solution discovered in the previous window $W^{t-1}$. The equations 8 and 9 limit the charging/discharging rates of batteries as determined by the battery characteristics (a function of the SOC). Also, the binary variable $z_{h,s}$ ensures that the battery is either charging or discharging (but not both) in each $h$.

$$b_{h,s}^{chg} \leq z_{h,s} \times R_s^{chg}\left(SOC_{h-1,s}\right), \qquad \forall h \in W^t, \forall s \in S \quad (8)$$

$$b_{h,s}^{dsg} \leq (1 - z_{h,s}) \times R_s^{dsg}\left(SOC_{h-1,s}\right), \qquad \forall h \in W^t, \forall s \in S \quad (9)$$

The demand constraint is determined based on the DER asset forecast. Equations 10 and 11 are constraints for scheduling the flexible demands. Equation 10 ensures that the flexible demand scheduled in the entire optimization window is always equal to the expected total flexible demand. Also, the flexible demand scheduled in each slot should be less than the maximum limit allowed in a slot as indicated in equation 11.

$$\sum_h d_{h,s}^{flex} = d_s^{totflex}, \qquad \forall s \in S \quad (10)$$

$$0 \leq d_{h,s}^{flex} \leq d_s^{maxflex} \,, \forall h \in W^t, \forall s \in S \quad (11)$$

The trade volume revision constraint is determined based on the plurality of intraday market historical data, the DER asset forecast. Equation 3 quantifies the net power available at node $n$ to trade with the market during slot $h$. This volume estimation is being done during time slot t. It is possible that, a similar volume estimation for $h$ was done during the slots $t$ -1, $t$ -2, $\cdots$, $h$ -$\tau$ -$r$. Based on these earlier estimates, buy or sell bids might have been placed in the market during $t$ -1, $t$ -2, $\cdots$,, $h$- $\tau$ - $r$, resulting in prior market commitment for the aggregator. If $Qb_h^{clear}$ and $Qs_h^{clear}$ indicate the cumulative quanta of buy and sell commitments made in the market respectively before t for delivery slot $h$. Given these prior commitments, the total aggregated power available with the aggregator for delivery at $h$ that needs to be traded in the intraday market is defined by equation 12, as shown below :

$$x_h^{tot} = Qb_h^{clear} - Qs_h^{clear} + \sum_{n=1}^{N} x_{h,n} \quad \forall h \in W^t \quad (12)$$

The total quantity can be either positive or negative depending on the states and requirements of the DERs at $h$. If $x tot\ h$ is positive, it implies that the aggregator has surplus generation and needs to place sell offers in market. If $x tot\ h$ is negative, it means that the aggregator has excess demand and needs to place buy bids in market. This decision is made by the binary variable $\delta h$ in equation 13.

$$-M(1 - \delta_h) \leq x_h^{tot} \leq M\delta_h, \forall h \in W^t \quad (13)$$

If $\delta h$=1, the aggregator places sell offers; otherwise, it places buy bids. This is represented in equations A and B respectively. Also, both these constraints ensure that the aggregator places either buy bids or sell offers but not both.

$$x_h^{tot}\delta_h = q_{sh}, \forall h \in W^t \quad (B)$$

$$x_h^{tot}(\delta_h - 1) = qb_h, \forall h \in W^t \quad (C)$$

The above two constraints are nonlinear in nature. In order to make it easier for solvers to find the solution, we linearize them. Constraint A is linearized through equations 14 and 15. Similarly, constraint B is linearized through equations 16, 17, and 18.

$$-M\delta_h \le qs_h \le M\delta_h, \forall h \in W^t \quad (14)$$

$$x_h^{tot} - M(\delta_h - 1) \le qs_h \le x_h^{tot} + M(1-\delta_h) \, \forall h \in W^t \quad (15)$$

$$-M(1-\delta_h) \le \widehat{qb_h} \le M(1-\delta_h) \, \forall h \in W^t \quad (16)$$

$$x_h^{tot} - M\delta_h \le \widehat{qb_h} \le x_h^{tot} + M\delta_h \, \forall h \in W^t \quad (17)$$

$$qb_h = -\widehat{qb_h} \quad (18)$$

The buy-sell constraint is determined based on the plurality of intraday market historical data. The buy/sell prices to be within their maximum and minimum limits obtained from the historical data is as shown below:

$$P_h^L \le ps_h, pb_h \le P_h^H \quad \forall h \in W^t \quad (19)$$

Given the plurality of constraints (explained above), the DER aggregator at time t has to decide the amount of energy to buy (or sell) in the market during $h$. It should also determine the prices of the buy bids and sell offers. The values of these decision variables have to be determined so that the revenue earned by the aggregator through trading is maximized as shown below in the basic operation schedule:

$$\max_{p_h, q_h} \sum_{h \in W^t} ps_h qs_h . F^{sell}(p_h, q_h) - \sum_{h \in W^t} pb_h qb_h (1 - F^{buy}(p_h, q_h)) \quad (A)$$

The above basic operation schedule for DER aggregators in intraday markets is a mixed integer non-linear programming (MINLP) problem. The integer variables get introduced due to the either-or constraints in the operation of batteries present in the DER pool and the overall buy vs. sell decision to be made by the aggregator for delivery slot $h$. Non-linearity gets introduced due to the presence of $F^{sell}$ and $F^{buy}$. Hence the basic operation schedule has to be optimized to ensure simple calculations.

At step 306 of the method 300, the plurality of DER is scheduled at the pre-defined intraday time by optimizing the basic operation schedule at the scheduler 206. The scheduling comprises determining a final set of price parameters, a final set of volume parameters and a final operation schedule of the plurality of DERs.

The basic operation schedule disclosed herein is the MINLP problem. One way to achieve this is to do a piece-wise linear approximation for each of the terms in the objective function. However, as the individual terms are multi-variate functions, the number of pieces (and hence the number of resulting integer variables) required to obtain an acceptable piece-wise linear approximation will be much higher in comparison to approximating a uni-variate function. Further, the integer variables get introduced due to the either-or constraints in the operation of batteries present in the DER pool and the overall buy vs. sell decision to be made by the DER aggregator for delivery slot $h$.

The integer variables get introduced in the formulation due to the constraint that battery can either charge or discharge (but not both) during any given time slot - this is enforced by the binary variable $z_{h,s}$ in equations 8 and 9. The above constraint is relaxed as follows.

For relaxing $z_{h,s}$, it is assumed that the maximum battery charging and discharging rates to be independent of the SOC level, then $z_{h,s}$ need not be introduced in the problem formulation. Let $r_{h,s}$ be a continuous variable that refers to the charging rate of battery with subscriber $s$ during delivery slot $h$. A positive value for $r_{h,s}$ indicates that the battery is charging while a negative value indicates that it is discharging. If $R_{s,*}^{chg}$ and $R_{s,*}^{dsg}$ refer to the maximum charging and discharging rates respectively for a battery, then equations 6, 8, and 9 can be replaced with the following:

$$SOC_{h,s} = SOC_{h-1,s} + \left( r_{h,s} \times \Delta \right) \quad \forall h \in W^t, \forall s \in S \quad (21)$$

$$R_{s,*}^{dsg} \leq r_{h,s} \leq R_{s,*}^{chg} \quad \forall h \in W^t, \forall s \in S \quad (22)$$

*wherein $\Delta$ refers to the duration of a time slot*

Further in an attempt to limit the number of integer variables in the reformulation within the basic operation schedule, disclosed optimization converts the bi-variate terms into uni-variate terms and solve the problem as explained below.

At step 306A of the method 300, the set of basic price parameters is initialized in the basic operation schedule based on the plurality of intraday market historical data to obtain a first operation schedule.

In an embodiment, the set of basic price parameters is initialized in the basic operation schedule based on the plurality of intraday market historical data - wherein the buy price and the sell price be initialized to some value, say $p_h^{s\,(0)}$ and $p_h^{b(0)}$ respectively. Now, each of the two terms in the objective function have only one decision variable, namely $qs_h$ and $qb_h$. The individual terms can now be approximated in a piece-wise linear fashion which converts the original MINLP to a Mixed integer linear program (MILP). Hence the basic operation schedule (Equation A) is written as the first operation schedule as shown below:

$$\max_{p_h, q_h} \sum_{h \in W^t} ps_h^{(0)} qs_h . F^{sell}(ps_h^{(0)}, qs_h) - \sum_{h \in W^t} pb_h^{(0)} qb_h(1 - F^{buy}(pb_h^{(0)}, q_h)) \quad (AA)$$

Hence for the first operation schedule, the plurality of constraints ( Equation 1 to 18) will be applicable since they are related to the volume variables.

At step 306B of the method 300, a first set of volume parameters is determined using the first operation schedule.

In an embodiment, the first operation schedule is solved using the $p_h^{s\,(0)}$ and $p_h^{b(0)}$ to obtain the first set of volume parameters - $q_h^{s\,(0)}$ and $q_h^{b(0)}$.

At step 306C of the method 300, a second operation schedule is obtained using the first set of volume parameters in the first operation schedule.

In an embodiment, the first set of volume parameters - $q_h^{s\,(0)}$ and $q_h^{b(0)}$. In the first operation schedule are used to obtain the second operation schedule as shown below:

$$\max_{p_h, q_h} \sum_{h \in W^t} qs_h^{(0)} ps_h . F^{sell}(ps_h, qs_h^{(0)}) - \sum_{h \in W^t} qb_h^{(0)} pb_h(1 - F^{buy}(pb_h, qb_h^{(0)})) \quad (AB)$$

Hence for the second operation schedule, the plurality of constraints (1-18) are not applicable since they are not related to the price variables. However, the constraint as defined in equation 19 is applicable.

At step 306D of the method 300, a first set of price parameters is determined using the second operation schedule based on the first set of volume parameters.

In an embodiment, the second operation schedule is solved using the first set of volume parameters - $q_h^{s\,(0)}$ and $q_h^{b(0)}$ to obtain the $p_h^{s\,(1)}$ and $p_h^{b(1)}$ .

At step 306E of the method 300, a second set of volume parameters is determined using the first operation schedule based on the first set of price parameters.

In an embodiment, the first operation schedule is solved using the first set of price parameters - $p_h^{s\,(1)}$ and $p_h^{b(1)}$ to obtain the $q_h^{s\,(1)}$ and $q_h^{b(1)}$ .

At step 306F of the method 300, a second set of price parameters is determined using the second operation schedule based on the second set of volume parameters.

In an embodiment, the second operation schedule is solved using the second set of volume parameters - $q_h^{s\,(1)}$ and $q_h^{b(1)}$ to obtain the $p_h^{s\,(2)}$ and $p_h^{b(2)}$ .

At step 306G of the method 300, a third set of volume parameters is determined using the first operation schedule based on the second set of price parameters.

In an embodiment, the first operation schedule is solved using the second set of price parameters - $p_h^{s\,(2)}$ and $p_h^{b(2)}$ to obtain the $q_h^{s\,(2)}$ and $q_h^{b(2)}$ .

At step 306H of the method 300, a third set of price parameters is determined using the second operation schedule based on the third set of volume parameters.

In an embodiment, the second operation schedule is solved using the set of volume parameters - $q_h^{s\,(2)}$ and $q_h^{b(2)}$ to obtain the $p_h^{s\,(3)}$ and $p_h^{b(3)}$ .

At step 306I of the method 300, a set of error parameters is computed. The set of error parameters is computed using the second set of price parameters, the second set of volume parameters, the third set of price parameters and the third set of volume parameters.

In an embodiment, the set of error parameters is computed using the second set of price parameters, the second set of volume parameters, the third set of price parameters and the third set of volume parameters is as shown below:

$$\varepsilon^{v+1}{}_{sp} = |\, p_h^{s(v+1)} - p_h^{s(v)}| \quad (22)$$

$$\varepsilon^{v+1}{}_{bp} = |\, p_h^{b(v+1)} - p_h^{b(v)}|$$

$$\varepsilon^{v+1}{}_{sq} = |q_h^{s\,(v+1)} - q_h^{s\,(v)}|$$

$$\varepsilon^{v+1}{}_{bq} = |q_h^{b\,(v+1)} - q_h^{b\,(v)}|$$

At step 306J of the method 300, the set of error parameters is compared to a set of error threshold parameters. Based on the comparison one of below steps is performed:

At step 306K of the method 300, if the set of error parameters is within the set of error threshold parameters, then setting the third set of price parameter as the final set of price parameters and setting the third set of volume parameter as the final set of volume parameters.

At step 306L of the method 300, if the set of error parameters is not within the set of error threshold parameters, then iteratively solving the first operation schedule and the second operation schedule until the set of error parameters is within the set of error threshold parameters.

At step 306M of the method 300, the final operation schedule of the plurality of DERs is determined. The final operation schedule of the plurality of DERs is determined based on the final set of price parameters, a final set of volume parameters using the basic operation schedule.

In an embodiment, the final operation schedule $p_h^{s(v+1)}, p_h^{b(v+1)}, q_h^{s\,(v+1)}, q_h^{b\,(v+1)}$ is selected provided the below condition is true:

$$\varepsilon^{v+1}{}_{sp} \leq \varepsilon^t \qquad (23)$$

$$\varepsilon^{v+1}{}_{bp} \leq \varepsilon^t$$

$$\varepsilon^{v+1}{}_{sq} \leq \varepsilon^t$$

$$\varepsilon^{v+1}{}_{bq} \leq \varepsilon^t$$

EXPERIMENTS:

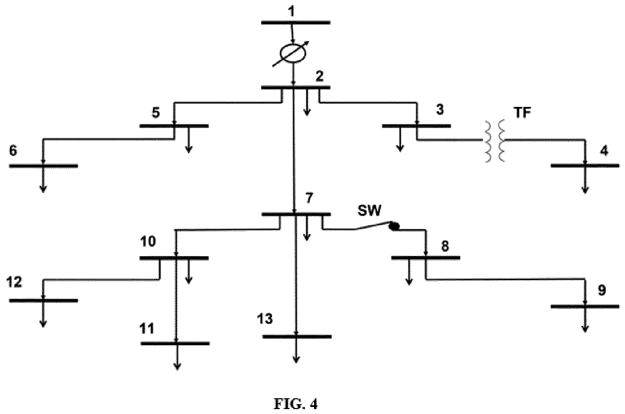

The performance of the disclosed techniques is tested on the IEEE 13 bus (node) radial distribution network shown in Figure 4. The connectivity, voltage levels, line parameters, and background loads are all defined as given in the network specifications. For this network, the nodal injection/withdrawal is obtained limits for DER aggregators as follows. We uniformly increase the power injection/withdrawal by DER aggregators in all the nodes until the network operational constraints (such as thermal limits of the lines and voltage levels at the buses) are violated during network operations. The values at which the violations take place are taken as the network limits at the respective nodes. At different nodes of this network, an aggregator (with 26 DERs) is introduced, whose operations is managed by a single aggregator. The DER aggregators are assumed to be installed in France and for simplicity, the charging/discharging rates of the batteries are taken to be independent of the SOC. Information regarding the set of DER aggregators introduced in the network is given in Table 1 below:

Table 1: Information regarding the set of DER aggregators

| Type | Description of DER aggregator | No. of DER aggregators | Avg. Size (KW) |
|---|---|---|---|
| I | Fixed & flexible demand | 6 | 300; 50 |
| II | Fixed + flexible demand with Solar | 4 | 400; 350; 2300 |
| III | Fixed + flexible demand with Storage | 7 | 400; 400; 2650 |
| IV | Solar with Storage | 5 | 1690 and 2480 |
| V | Fixed/flexible demand with Solar & Storage | 4 | 600, 330, 2000;3300 |

Market details: A real world logs of market operations of EPEX intraday market in France is obtained for experimentation purposes. The logs from the order book as well as the cleared transactions were obtained, wherein the log contains data from September 2019 to June 2020. Using the market clearing rules, a module was also developed to clear simple buy/sell bids placed in the order book. The market clearing module is needed to clear the bids placed by the proposed trading techniques - along with the other buy/sell orders present in the historical intraday market logs.

In order to optimize the bids placed in the market, the disclosed bid optimization techniques need forecasts of the two-dimensional histogram $(f^{t,h}(p,q))$, customer demands, and solar generation for the time slots in the optimization window $W^t$. The histograms for the slots in $W^t$ are obtained using a persistence model - i.e., the histogram obtained over a window of previous 21 days was assumed to remain the same over the next day. For forecasting the solar generation and demand, we use a stacked LSTM network. For experimentation purposes a window size of $\tau = 6$ *and r* = 2 is adopted to achieve a balance between having a wide enough window for optimization and reliable forecasts.

Techniques compared: On the above-described network, DER population, and market set-up, performance of the following techniques is studied:

(1) Baseline - ID3: The trading technique considered as a baseline is very similar to the proposed MINLP but for the change that the price variables *psh* and *pbh* are always set to be the ID3 price of a delivery slot. The ID3 price of a delivery slot is defined as the volume weighted average price of the cleared transactions in the three hours prior to the delivery. The ID3 price is picked for trading since it is an important index based on which market participants hedge against positive or negative spikes. While the price is fixed to be ID3, the optimal trade quantities are determined by solving the first operation schedule. Also, $F^{sell}$ ($p_h$, $q_h$)and (1 - $F^{buy}$ ($p_h$, $q_h$)) are taken to be 1 - i.e., bids based on the ID3 price are assumed to be cleared by the market. This baseline helps us to understand the efficacy of modeling the market dynamics (through the joint price volume histograms) in the optimal bid design.

(2) MILP: This refers to the iterative non-linear relaxation discussed that converts the original problem to a coupled MILP-simple maximization set-up.

The disclosed technique in its entirety is solved in commercial solvers such as CPLEX. We note here that before feeding the MINLP problem to CPLEX, to make it easier for the solver, we linearized constraints 4, 6, and 7 as described in section 4.1. However, CPLEX could not solve the problem due to a non-quadratic, non-linear objective function present along with integer decision variables. Hence, The MILP iterative problem is proposed and solved using GLPK solver.

Metrics used for comparison: The performance of the various techniques is compared based on the net revenue earned by them over a period of 16 trading days. Net revenue refers to the difference between the revenue inflow through sell trades and revenue outflow through buy trades.

RESULTS:

Solving for the optimal bids for one value of *t* (for all $h \in W^t$) under each of ID3-and MILP techniques took an average of 11 seconds or less on commonly found hardware (4 cores, 8GB RAM, 64 bit machine).

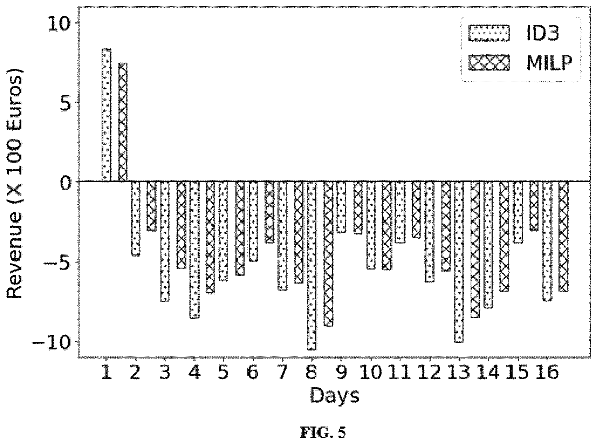

Revenue earned: The revenue earned by the two techniques across the 16 test days is shown in FIG.5. From this figure, following is deduced: The daily revenue earned by aggregator under the two techniques across a majority of the days is negative. In other words, the aggregator has to spend money to buy electricity from the market. This is because of two reasons: (i) the set of DERs considered include demands as well which necessitates that power be purchased from the market. (ii) the amount of generation from solar PV is not enough to over-weigh the demand on all days owing to the smaller panel sizes and/or the weather conditions (November). On almost all the days, the revenue inflow/outflow is better than or very close to the baseline technique of ID3 based trading. When viewed holistically across all the 16 days, the baseline results in a revenue outflow of €8862 whereas, the proposed techniques MILP result in an outflow of €7604 respectively. In other words, MILP improve the performance of the baseline by 14% respectively.

The baseline use an optimization formulation similar to the disclosed techniques to determine the optimal quantities to trade. However, it does not use the joint price-volume histograms in each transaction slot as done by the proposed techniques. This shows that modeling the market dynamics through price-volume histograms (the function $f^{t,h}$ ($p,q$) ) is helpful to design better trading bids.

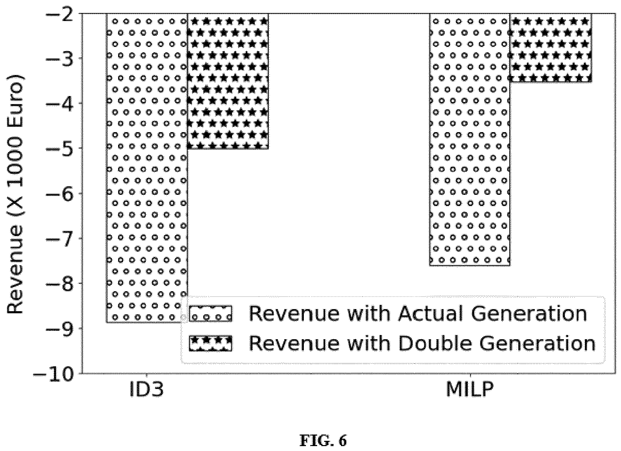

Impact of higher generation: The generation capacity available within the DER pool is studied to understand the relative performance of the baseline with respect to the disclosed techniques. The FIG.6 shows the performance of the baseline and the disclosed techniques under a higher generation (twice the solar panel sizes with all other parameters remaining the same). As is expected, the revenue outflow from the aggregator decreases across all the three techniques under increased generation. More importantly, it is observed that even under this higher generation, relative performance of the disclosed techniques and the baseline does not change with respect to one other.

Impact of pool transactions: During a delivery slot *h*, an aggregator's subscriber base can be categorized into two types: type i: those who generate electricity (solar, battery discharge) and type ii: those who consume electricity (loads, battery charging). The generation available with the aggregator during *h* can either be: (a) exported to the intraday market through sell bids or (b) utilized to meet the demands of its own subscribers falling under type ii. Option (a) will increase the revenue generated by the aggregator while option (b) will reduce the cost incurred by the aggregator. Option (b) is referred to as "pool" trading. In the disclosed technique, the set of constraints that include variables $x_{h,n}^{nodeImp}$ or $x_{h,n}^{nodeExp}$ in their specifications are those that model the pool transactions. The pool transactions can be explicitly turned off by introducing additional constraints that set $x_{h,n}^{nodeImp} = 0$ and $x_{h,n}^{nodeExp} = 0$ for all *t, h* and *n*.

In the case of MILP, the revenue outflow decreases by 2.5%. The aggregator achieves this improvement by intelligently weighing the market transactions against the pool transactions based on the perceived asymmetry between the successful market clearing of a sell bid and a buy bid with the same (price, volume) values at $t$ for a given delivery slot $h$.

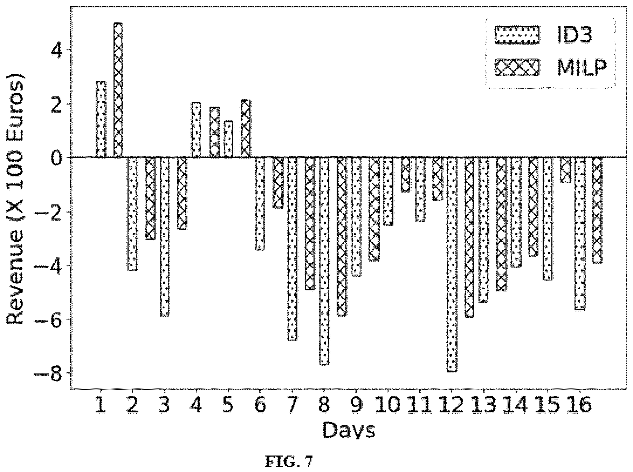

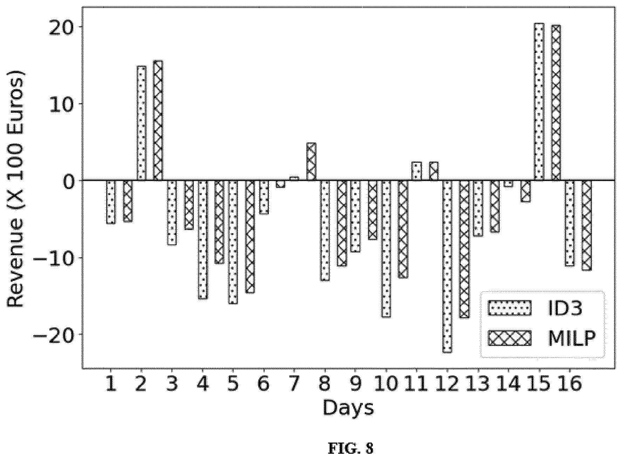

Impact of seasons & problem size: To better understand the behavior of the proposed techniques across seasons, performance has been studied over a different period - namely June 2020. The FIG.7 shows the performance of the proposed techniques along with the baseline for this period. The revenue outflow for the aggregator under the baseline and MILP are €5842, and €3535 respectively. As illustrated the disclosed techniques perform better than the baseline during summer as well. The performance of the proposed techniques has been tested under different problem sizes (i.e., varying number of DERs). The FIG.8 shows the performance of the proposed techniques along with the baseline on a set of 250 DER aggregators. The disclosed techniques outperform the baseline even under a large DER set. Further, the Table 2 summarizes the key scalability parameters of the original problem and relaxations for different problem sizes.

Table 2 : The key scalability parameters of the original problem and relaxations for different problem sizes.

| Scenario | Original MINLP Problem (cont vars, int vars) | MILP (cont vars, int vars) |
|---|---|---|
| 50 DERs (16 batteries) | Not solvable (882, 102) (16 batt) | 4 seconds to solve (787,42) |
| 250 DERs (80 batteries) | Not solvable (2538, 486) (80 batt) | 9 seconds to solve (2827, 42) |
| | | |
| 500 DERs (160 batteries) | Not solvable (4608, 966) (160 batt) | 15 seconds to solve (5377, 42) |

The problems of reasonable size (five hundred DERs), the proposed techniques MILP take 15 seconds to optimize the bids for the bids for one $W^t$ - a sequence of $\tau$ = 6 consecutive delivery slots given by $[t + r, t + r + 6]$ on standard hardware (4 cores, 8GB RAM, 64bit machine). However, the original formulation does not yield any results even on the smallest problem size (50 DERs). To summarize, it can be said that the proposed relaxations are relatively more scalable than the original problem.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

This disclosure relates generally to optimal intraday scheduling of aggregated Distributed Energy Resources (DERs). Owing to their stochastic nature, DERs aggregators are more suited to participate in intraday electricity markets. The current works on DER aggregators trading in intraday markets do not satisfactorily model the different aspects. The disclosure is an optimal trading strategy for aggregators managing heterogeneous DERs to participate in intraday markets. The intraday market is modelled using a joint price-volume dynamics distribution and an optimal bidding strategy is disclosed for the trades/bids placed earlier to be corrected based on the revised forecasts of demand and generation while allowing for energy exchanges within the DER pool. Further the optimal bidding strategy of aggregators in an intraday market is a MINLP problem, which is solved by converting the complex non-linearities in the problem into a coupled MILP - simple maximization set-up, which is then solved in an iterative fashion.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:

    receiving a plurality of inputs, via one or more hardware processors, wherein the plurality of inputs is associated with a plurality of intraday market historical data, a plurality of network data, a plurality of distributed energy resources (DER), a plurality of DER data including a DER asset forecast, and a DER technical information (302); creating a basic operation schedule of the plurality of DERs for a pre-defined intraday time, via the one or more hardware processors, using the plurality of inputs based on a scheduling technique subject to a plurality of constraints, wherein the first operation schedule comprises a set of basic price parameters, a set of basic volume parameters, a basic operation schedule of the plurality of DERs and the plurality of constraints are determined based on the plurality of inputs (304); and
    scheduling the plurality of DERs at the pre-defined intraday time by optimizing the basic operation schedule (306), via the one or more hardware processors, wherein the scheduling comprises determining a final set of price parameters, a final set of volume parameters, and a final operation schedule of the plurality of DERs, comprises:

        initializing the set of basic price parameters in the basic operation schedule based on the plurality of intraday market historical data to obtain a first operation schedule (306A);
        determining a first set of volume parameters using the first operation schedule (306B);
        obtaining a second operation schedule using the first set of volume parameters in the first operation schedule (306C);
        determining a first set of price parameters using the second operation schedule based on the first set of volume parameters (306D);
        determining a second set of volume parameters using the first operation schedule based on the first set of price parameters (306E);
        determining a second set of price parameters using the second operation schedule based on the second set of volume parameters (306F);
        determining a third set of volume parameters using the first operation schedule based on the second set of price parameters (306G);
        determining a third set of price parameters using the second operation schedule based on the third set of volume parameters (306H);
        computing a set of error parameters using the second set of price parameters, the second set of volume parameters, the third set of price parameters and the third set of volume parameters (306I);
        comparing the set of error parameters to a set of error threshold parameters (306J) and performing one of:

a) setting the third set of price parameter as the final set of price parameters and setting the third set of volume parameter as the final set of volume parameters (306K), if the set of error parameters is within the set of error threshold parameters, and

b) iteratively solving the first operation schedule and the second operation schedule until the set of error parameters is within the set of error threshold parameters (306L), if the set of error parameters is not within the set of error threshold parameters; and

determining the final operation schedule of the plurality of DERs based on the final set of price parameters, a final set of volume parameters using the basic operation schedule (306M).

2. The processor implemented method according to claim 1, wherein the set of basic price parameters comprises a buy price and a sell price and the set of basic volume parameters comprises a buy volume and a sell volume.

3. The processor implemented method according to claim 1, the plurality of constraints comprises a market and pool trading constraint, a network and battery constraint, a demand constraint, a trade volume revision constraint, and a buy-sell constraint.

4. The processor implemented method according to claim 2, wherein the market and pool trading constraint is determined based on the DER asset forecast, the network and battery constraint is determined based on the plurality of network data and a DER technical information, the demand constraint is determined based on the DER asset forecast, the trade volume revision constraint is determined based on the plurality of intraday market historical data, the DER asset forecast and the buy-sell constraint is determined based on the plurality of intraday market historical data.

5. The processor implemented method according to claim 1, wherein the basic operation schedule is expressed as:

$$\max_{p_h, q_h} \sum_{h \in W^t} ps_h qs_h . F^{sell}(p_h, q_h) - \sum_{h \in W^t} pb_h qb_h (1 - F^{buy}(p_h, q_h))$$

where,

$h$ is a pre-defined time at which power should be delivered,
$p_h$ is set of basic price parameters comprising ($ps_k, pb_k$ ),
$q_h$ is set of basic price volume parameters comprising ($qs_k, qb_k$) ,
$ps_h$ is set of basic price parameters - the sell offer price during $h$,
$qs_k$ is set of basic volume parameters - the sell offer volume during $h$,
$pb_h$ is set of basic price parameters - the buying price during $h$,
$qb_h$ is set of basic volume parameters - the buying volume during $h$,
$W_t$ is an intraday trading window,
$F^{buy}$ is a Joint probability distribution for buying, and
$F^{sell}$ is Joint probability distribution for selling.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a plurality of inputs, via one or more hardware processors, wherein the plurality of inputs is associated with a plurality of intraday market historical data, a plurality of network data, a plurality of DERs, a plurality of DER data including a DER asset forecast and a DER technical information;
create a basic operation schedule of the plurality of DERs for a pre-defined intraday time, via the one or more hardware processors, using the plurality of inputs based on a scheduling technique subject to a plurality of constraints, wherein the first operation schedule comprises a set of basic price parameters, a set of basic volume parameters, a basic operation schedule of the plurality of DERs and the plurality of constraints are determined based on the plurality of inputs; and
schedule the plurality of DER at the pre-defined intraday time by optimizing the basic operation schedule, via the one or more hardware processors, wherein the scheduling comprises determining a final set of price parameters, a final set of volume parameters and a final operation schedule of the plurality of DERs, wherein:

initializing the set of basic price parameters in the basic operation schedule based on the plurality of intraday market historical data to obtain a first operation schedule;
determining a first set of volume parameters using the first operation schedule;
obtaining a second operation schedule using the first set of volume parameters in the first operation schedule;
determining a first set of price parameters using the second operation schedule based on the first set of volume parameters;
determining a second set of volume parameters using the first operation schedule based on the first set of price parameters;
determining a second set of price parameters using the second operation schedule based on the second set of volume parameters;
determining a third set of volume parameters using the first operation schedule based on the second set of price parameters;
determining a third set of price parameters using the second operation schedule based on the third set of volume parameters;
computing a set of error parameters using the second set of price parameters, the second set of volume parameters, the third set of price parameters and the third set of volume parameters;
comparing the set of error parameters to a set of error threshold parameters and performing one of:

a) setting the third set of price parameter as the final set of price parameters and setting the third set of volume parameter as the final set of volume parameters, if the set of error parameters is within the set of error threshold parameters, and
b) iteratively solving the first operation schedule and the second operation schedule until the set of error parameters is within the set of error threshold parameters, if the set of error parameters is not within the set of error threshold parameters; and

determining the final operation schedule of the plurality of DERs based on the final set of price parameters, a final set of volume parameters using the basic operation schedule.

7. The system according to claim 6, wherein the set of basic price parameters comprises a buy price and a sell price and the set of basic volume parameters comprises a buy volume and a sell volume.

8. The system according to claim 6, wherein the plurality of constraints comprises a market and pool trading constraint, a network and battery constraint, a demand constraint, a trade volume revision constraint and a buy-sell constraint.

9. The system according to claim 8, wherein the market and pool trading constraint is determined based on the DER asset forecast, the network and battery constraint is determined based on the plurality of network data and a DER technical information, the demand constraint is determined based on the DER asset forecast, the trade volume revision constraint is determined based on the plurality of intraday market historical data, the DER asset forecast and the buy-sell constraint is determined based on the plurality of intraday market historical data.

10. The system according to claim 6, wherein the basic operation schedule is expressed as:

$$\max_{p_h, q_h} \sum_{h \in W^t} ps_h \, qs_h . F^{sell}(p_h, q_h) - \sum_{h \in W^t} pb_h \, qb_h (1 - F^{buy}(p_h, q_h))$$

where,

$h$ is a pre-defined time at which power should be delivered,
$p_h$ is set of basic price parameters comprising ($ps_k, pb_k$),

$q_h$ is set of basic price volume parameters comprising $(qs_h, qb_h)$ ,
$ps_h$ is set of basic price parameters - the sell offer price during $h$,
$qs_k$ is set of basic volume parameters - the sell offer volume during $h$,
$pb_h$ is set of basic price parameters - the buying price during $h$,
$qb_k$ is set of basic volume parameters - the buying volume during $h$,
$W_t$ is an intraday trading window,
$F^{buy}$ is a Joint probability distribution for buying, and
$F^{sell}$ is Joint probability distribution for selling.

**11.** One or more non-transitory machine readable information storage mediums comprising one or more instructions which when executed by one or more hardware processors cause:

receiving a plurality of inputs, wherein the plurality of inputs is associated with a plurality of intraday market historical data, a plurality of network data, a plurality of distributed energy resources (DER), a plurality of DER data including a DER asset forecast, and a DER technical information;

creating a basic operation schedule of the plurality of DERs for a pre-defined intraday time, using the plurality of inputs based on a scheduling technique subject to a plurality of constraints, wherein the first operation schedule comprises a set of basic price parameters, a set of basic volume parameters, a basic operation schedule of the plurality of DERs and the plurality of constraints are determined based on the plurality of inputs; and

scheduling the plurality of DERs at the pre-defined intraday time by optimizing the basic operation schedule, wherein the scheduling comprises determining a final set of price parameters, a final set of volume parameters, and a final operation schedule of the plurality of DERs, comprises:

initializing the set of basic price parameters in the basic operation schedule based on the plurality of intraday market historical data to obtain a first operation schedule;

determining a first set of volume parameters using the first operation schedule;

obtaining a second operation schedule using the first set of volume parameters in the first operation schedule;

determining a first set of price parameters using the second operation schedule based on the first set of volume parameters;

determining a second set of volume parameters using the first operation schedule based on the first set of price parameters;

determining a second set of price parameters using the second operation schedule based on the second set of volume parameters;

determining a third set of volume parameters using the first operation schedule based on the second set of price parameters;

determining a third set of price parameters using the second operation schedule based on the third set of volume parameters;

computing a set of error parameters using the second set of price parameters, the second set of volume parameters, the third set of price parameters and the third set of volume parameters;

comparing the set of error parameters to a set of error threshold parameters and performing one of:

a) setting the third set of price parameter as the final set of price parameters and setting the third set of volume parameter as the final set of volume parameters, if the set of error parameters is within the set of error threshold parameters, and

b) iteratively solving the first operation schedule and the second operation schedule until the set of error parameters is within the set of error threshold parameters, if the set of error parameters is not within the set of error threshold parameters; and

determining the final operation schedule of the plurality of DERs based on the final set of price parameters, a final set of volume parameters using the basic operation schedule.

SYSTEM
100

PROCESSOR(S)
104

I/O
INTERFACE(S)
106

MEMORY
102

DATABASE
108

FIG. 1

Plurality of inputs

```
┌─────────────────────────────────────────────────────┐
│                                                       │
│           ┌─────────────────────────────┐            │
│           │     INPUT MODULE (S)         │            │
│           │          202                 │            │
│           └─────────────────────────────┘            │
│                                                       │
│   ┌────────────────────┐      ┌────────────────────┐ │
│   │ BASIC OPERATION    │      │    SCHEDULER       │ │
│   │   SCHEDULER        │ ───► │       206          │ │
│   │      204           │      │                    │ │
│   └────────────────────┘      └────────────────────┘ │
│                                                       │
└─────────────────────────────────────────────────────┘
```

200

(a) a final set of price parameters,
(b) a final set of volume parameters, and
(c) a final operation schedule of the plurality of DERs

FIG. 2

receiving a plurality of inputs, via one or more hardware processors, wherein the plurality of inputs is associated with a plurality of intraday market historical data, a plurality of network data, a plurality of distributed energy resources (DER), a plurality of DER data including a DER asset forecast and a DER technical information ⎯ 302

creating a basic operation schedule of the plurality of DERs for a pre-defined intraday time, via the one or more hardware processors, using the plurality of inputs based on a scheduling technique subject to a plurality of constraints, wherein the first operation schedule comprises a set of basic price parameters, a set of basic volume parameters, a basic operation schedule of the plurality of DERs and the plurality of constraints are determined based on the plurality of inputs ⎯ 304

**300**

A

**FIG. 3A**

Ⓐ

scheduling the plurality of DER at the pre-defined intraday time by optimizing the basic operation schedule, via the one or more hardware processors, wherein the scheduling comprises determining a final set of price parameters, a final set of volume parameters and a final operation schedule of the plurality of DERs, wherein: — 306

the set of basic price parameters in the basic operation schedule is initialized based on the plurality of intraday market historical data to obtain a first operation schedule — 306A

determining a first set of volume parameters using the first operation schedule — 306B

obtaining a second operation schedule using the first set of volume parameters in the first operation schedule — 306C

determining a first set of price parameters using the second operation schedule based on the first set of volume parameters — 306D

Ⓑ

300 ⤴

**FIG. 3B**

306

B

determining a second set of volume parameters using the first operation schedule based on the first set of price parameters

306E

determining a second set of price parameters using the second operation schedule based on the second set of volume parameters

306F

determining a third set of volume parameters using the first operation schedule based on the second set of price parameters

306G

determining a third set of price parameters using the second operation schedule based on the third set of volume parameters

306H

computing a set of error parameters using the second set of price parameters, the second set of volume parameters, the third set of price parameters and the third set of volume parameters

306I

C

300

**FIG. 3C**

306

C

comparing the set of error parameters to a set of error threshold parameters (306J) and performing one of: 306J

306K

setting the third set of price parameter as the final set of price parameters and setting the third set of volume parameter as the final set of volume parameters, if the set of error parameters is within the set of error threshold parameters

306L

iteratively solving the first operation schedule and the second operation schedule until the set of error parameters is within the set of error threshold parameters, if the set of error parameters is not within the set of error threshold parameters

306M

determining the final operation schedule of the plurality of DERs based on the final set of price parameters, a final set of volume parameters using the basic operation schedule

300

**FIG. 3D**

FIG. 4

FIG. 5

**FIG. 6**

**FIG. 7**

**FIG. 8**

European Patent Office — Europäisches Patentamt — European Patent Office — Office européen des brevets

# EUROPEAN SEARCH REPORT

Application Number

EP 23 17 4871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NIKKHAH SAMAN ET AL: "A Joint Risk- and Security-Constrained Control Framework for Real-Time Energy Scheduling of Islanded Microgrids", IEEE TRANSACTIONS ON SMART GRID, IEEE, USA, vol. 13, no. 5, 30 April 2022 (2022-04-30), pages 3354-3368, XP011918091, ISSN: 1949-3053, DOI: 10.1109/TSG.2022.3171816 [retrieved on 2022-05-02] * Sections I, III, V; figure 2 * | 1-11 | INV. G06Q10/04 G06Q30/08 G06Q50/06 H02J3/00 |
| A | STEBER DAVID ET AL: "A COMPREHENSIVE ELECTRICITY MARKET MODEL USING SIMULATION AND OPTIMIZATION TECHNIQUES", 2018 WINTER SIMULATION CONFERENCE (WSC), IEEE, 9 December 2018 (2018-12-09), pages 2095-2106, XP033512053, DOI: 10.1109/WSC.2018.8632241 [retrieved on 2019-01-31] * Sections 3, 4; figures 1, 4 * | 1-11 | TECHNICAL FIELDS SEARCHED (IPC) G06Q H02J |
| A | XIAOLIN AYÓN ET AL: "Aggregators' Optimal Bidding Strategy in Sequential Day-Ahead and Intraday Electricity Spot Markets", ENERGIES, vol. 10, no. 4, 1 April 2017 (2017-04-01), page 450, XP055588085, DOI: 10.3390/en10040450 * Sections 2, 3, 4; figure 1 * | 1-11 | |

The present search report has been drawn up for all claims

| Place of search | Date of completion of the search | Examiner |
|---|---|---|
| Munich | 13 November 2023 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221036846